# FASCICULE DE BREVET EUROPEEN

(11) **EP 2 318 206 B1**
(45) Date de publication et mention de la délivrance du brevet: **04.01.2017**
(21) Numéro de dépôt: 09800070.6
(22) Date de dépôt: 23.07.2009
(51) Int. Cl.: B32B 17/10, E06B 3/67

(54) **VITRAGE ISOLANT MULTIPLE**
MEHRFACHE ISOLIERVERGLASUNG
INSULATING MULTIPLE GLAZING

(30) Priorité: 24.07.2008 EP 08104872
(43) Date de publication de la demande: 11.05.2011
(73) Titulaire: AGC Glass Europe, 1348 Louvain-la-Neuve (BE)
(72) Inventeur: DI STEFANO, Gaëtan, B-6040 Jumet (BE)
(74) Mandataire: Le Vaguerèse, Sylvain Jacques
(86) Numéro de dépôt international: PCT/EP2009/059508
(87) Numéro de publication internationale: WO 2010/010156

(56) Documents cités:
- EP-A- 0 678 484
- WO-A-2006/125874
- BE-A2- 904 452
- FR-A- 1 041 172
- FR-A- 2 293 536
- JP-A- 6 219 790

## Description

La présente invention concerne les vitrages isolants multiples. Ces vitrages sont utilisés de façon systématique notamment comme vitrages isolants thermiques. Les réglementations pour les économies d'énergie sont toujours plus exigeantes. Les industriels s'efforcent de proposer des solutions dans le sens demandé. Les doubles vitrages constituent actuellement la très grande majorité des produits utilisés pour répondre à cette exigence, qu'il s'agisse de constructions nouvelles ou de rénovation de bâtiments anciens.

Les performances en matière d'isolation des doubles vitrages ont été améliorées au cours du temps, notamment par l'adjonction de systèmes de couches bas-émissives, couches qui réfléchissent sélectivement une part importante des infrarouges sans réduire de façon gênante la transmission dans le domaine du visible. L'utilisation de gaz isolants comme l'argon dans l'espace entre les deux feuilles de verre améliore encore ces performances.

Les perfectionnements aux couches bas-émissives ont permis d'atteindre des isolations très intéressantes. Les progrès dans cette voie sont encore possibles, mais ces progrès ne peuvent qu'être d'ampleur limitée. Pour améliorer de manière très significative les performances d'isolation, les industriels ont cherché d'autres moyens. Les vitrages triples répondent à cet objectif. Dans la pratique la mise en oeuvre de vitrages triples entraîne à des contraintes qui jusqu'à présent ont limité considérablement leur utilisation.

En dehors d'un coût supplémentaire lié à la complexité accrue de leur composition, les vitrages triples posent d'autres problèmes. Les plus immédiats sont liés à leur encombrement et à leur poids.

L'invention se propose de fournir des vitrages triples isolant thermiquement, conservant une bonne transmission lumineuse et dont le poids et l'épaisseur soient tels que ces vitrages soient d'utilisation plus commode aussi bien en construction neuve qu'en rénovation de vitrage existant.

En dehors de leur propriété isolante, les vitrages doivent satisfaire à différentes exigences notamment en termes de résistance mécanique. Dans ce sens les vitrages qui sont utilisés en façade de bâtiment, notamment de bâtiments de grande hauteur doivent offrir toute les garanties contre les risques liés au bris de ce vitrages. Il est nécessaire de faire en sorte qu'en cas d'impact le verre ne risque pas de tomber en morceaux plus ou moins volumineux.

Dans cette optique, le risque vient essentiellement de ruptures causées par un impact provenant de l'intérieur du bâtiment.

Pour prévenir ce risque, dans le cas de vitrages doubles, il a été proposé de remplacer au moins une des feuilles de verre par un panneau comprenant deux feuilles de verre assemblées au moyen d'un intercalaire thermoplastique. La mise en oeuvre conduit habituellement à un panneau feuilleté dont l'épaisseur est supérieure à celle d'une feuille monolithique.

Pour les vitrages doubles l'augmentation d'épaisseur, et de poids qui accompagne l'utilisation d'un panneau feuilleté est susceptible de nécessiter l'usage de châssis renforcés. Dans le cas des vitrages triples la mise en oeuvre de panneaux feuilletés nécessite systématiquement l'emploi de châssis spécifiques qui dans le meilleur des cas renchérissent les opérations de rénovation, ou au pire rendent ces rénovations prohibitives.

L'invention vise donc à proposer des vitrages triples comportant au moins un panneau feuilleté, dont le poids au moins reste compatible avec les châssis utilisés précédemment. Dans ce sens les vitrages selon l'invention présentent par mètre carré de surface un poids qui n'est pas supérieur à 35kg, et de préférence pas supérieur à 30kg. En outre, pour obtenir les meilleures propriétés en terme d'isolation thermique, deux systèmes de couches bas-émissif sont nécessaires. Ils sont disposés en face 3 et 5 ou 2 et 5 du vitrage.

Pour atteindre des poids par unité de surface tels qu'indiqués, toutes les feuilles de verre utilisées doivent rester relativement peu épaisses. Pour des feuilles de dimensions usuelles pour les vitrages en question l'épaisseur choisie doit suffire pour leur conférer une certaine rigidité et une résistance mécanique appropriée. Pour cette raison il n'est pas possible de compenser un surcroît de poids lié à la présence du panneau feuilleté en réduisant trop l'épaisseur des feuilles monolithiques du triple vitrage.

Pour parvenir aux conditions de l'invention les inventeurs proposent en conséquence de faire en sorte que l'épaisseur du panneau feuilleté reste de l'ordre de grandeur de celle des feuilles monolithiques. Avantageusement l'épaisseur de chaque panneau feuilleté entrant dans la composition du vitrage triple, n'est pas supérieure à 5,5mm et de préférence pas supérieure à 5mm.

Compte tenu de l'épaisseur relativement faible de chacune des feuilles de verre de l'ensemble feuilleté, il est avantageux de faire en sorte que ces deux feuilles aient sensiblement la même épaisseur.

L'ensemble devant rester dans les limites de poids indiquées, l'épaisseur totale des feuilles de verre est, dans ces conditions, avantageusement inférieure à 12mm.

De même chacune des feuilles de verre monolithiques présente une épaisseur qui n'est pas supérieure à 6mm.

Si en dehors de l'isolation thermique les vitrages triples doivent encore offrir une transmission lumineuse relativement importante, notamment de plus de 70%, il faut prendre en compte l'absorption propre aux feuilles de verre utilisées. L'épaisseur totale du verre dans les triples vitrages est telle que, même sans système de couches, la transmission lumineuse pour des feuilles de verre « clair » n'est pas supérieure à 85% pour une épaisseur totale de l'ordre de 12mm. La présence des couches diminue sensiblement cette transmission.

Pour améliorer la transmission lumineuse de ces vitrages une solution consiste à utiliser une ou plusieurs feuilles de verre dit « extra-clair ». Ce verre dont la composition comporte une très faible teneur en oxyde de fer présente une transmission lumineuse accrue par rapport au verre clair ordinaire. A titre indicatif sous l'épaisseur de 12mm, la transmission lumineuse du verre extra-clair est de l'ordre de 90%.

Bien évidemment la transmission lumineuse est d'autant plus élevée à épaisseur totale de verre égale, que l'on choisit d'utiliser le plus possible de verre extra-clair. Le choix de combiner verre clair et extra-clair est fonction du coût relativement plus élevé du verre extra-clair.

En dehors de la qualité du verre, les systèmes de couches qui permettent de réfléchir les rayons infrarouges de manière sélective, introduisent aussi une certaine réflexion des rayons visibles. Il est donc souhaitable d'utiliser des systèmes particulièrement « sélectifs », autrement dit des systèmes qui tout en réfléchissant une très forte proportion des rayons infrarouges, présentent une réflexion dans le visible aussi faible que possible.

Le choix d'un système très sélectif, peut répondre à cet objectif. L'utilisation de deux systèmes de couches est un autre mode qui combiné à ce choix permet d'optimiser encore les résultats obtenus.

En pratique lorsque plusieurs systèmes de couches sont utilisés dans le même vitrage selon l'invention, chacun d'eux peut contribuer pour une part plus restreinte à la filtration des infrarouges. Dans les systèmes bas-émissifs à couche métallique de type argent, les couches réfléchissantes peuvent ainsi être relativement moins épaisses que dans les vitrages ne comportant qu'un seul système de couches.

Même en limitant la filtration opérée par chaque système de couches, il est possible de maintenir le coefficient d'isolation U à des valeurs très performantes, la présence d'un panneau feuilleté dans le vitrage n'ayant, comme le montrent les exemples ultérieurs, qu'une incidence minime sur ces performances.

La performance en matière d'isolation thermique est moins sensible à l'épaisseur des feuilles de verre, laquelle comme indiqué précédemment est plus dictée par des questions mécaniques, qu'à la nature des systèmes de couches et à l'espace séparant les feuilles de verre. Pour ce dernier l'augmentation de la distance entre les feuilles conduit à une amélioration sensible de l'isolation thermique au moins jusqu'à une distance de l'ordre de 16mm. Au delà, l'amélioration de l'isolation ne justifie pas l'accroissement de l'encombrement supplémentaire.

Pour les vitrages selon l'invention, le souci de ne pas avoir une épaisseur totale trop importante conduit à maintenir ces distances dans l'intervalle de 8 à 16mm, et de préférence entre 10 et 15mm. Une distance préférée est de l'ordre de 14mm.

Toujours pour obtenir une isolation thermique aussi performante que possible, l'espace entre les feuilles de verre est avantageusement rempli d'un gaz isolant. Typiquement les gaz isolants utilisés dans ces applications sont l'argon ou mieux encore le krypton.

Dans tous les cas, les vitrages triples selon l'invention offrent un coefficient d'isolation thermique qui n'est pas supérieur à 0,9 W/m².K, et avantageusement pas supérieur à 0,8 W/m².K. Dans les conditions les plus favorables ce coefficient d'isolation peut descendre à 0,5 W/m².K

Le choix d'un système de couches n'est pas seulement fonction des propriétés isolantes. Selon le mode d'utilisation il est aussi fonction du facteur solaire du vitrage. Ce facteur rend compte de la capacité du vitrage à permettre l'apport d'énergie extérieur. Ce facteur désigne le rapport entre l'énergie qui pénètre dans le bâtiment par le vitrage (énergie transmise et réémise après absorption) et l'énergie extérieure incidente.

Autrement dit le vitrage s'oppose à la déperdition d'énergie provenant de l'intérieur du bâtiment et simultanément récupère l'énergie solaire. Si il n'est pas souhaitable dans les régions à fort ensoleillement d'avoir un facteur solaire élevé qui en période estivale conduit à un échauffement excessif, au contraire dans les régions qui ne sont pas soumises à un fort ensoleillement il est souhaitable d'avoir un facteur solaire élevé.

Dans les régions « tempérées » le facteur solaire recherché est avantageusement de 50 à 65%.

La présence d'un panneau feuilleté peut aussi être mise à profit pour améliorer les caractéristiques d'isolation phonique de l'ensemble. Ceci est notamment le cas lorsque la feuille intercalaire est choisie en fonction de cette propriété. C'est par exemple le cas d'intercalaires dans la composition desquelles la teneur en plastifiant est accrue, ou encore lorsque les intercalaires sont constituées de plusieurs feuilles dont une au moins présente une plasticité accrue.

La structure des vitrages multiples isolants, est représentée de façon schématique aux figures annexées dans lesquelles:
- la figure 1 est une vue schématique en perspective d'un vitrage triple traditionnel;
- la figure 2 est analogue à la précédente mais présente en plus un système de couches sur une des feuilles de verre;
- la figure 3 représente un vitrage double comportant un panneau feuilleté ;
- la figure 4 représente un mode de réalisation d'un vitrage triple selon l'invention.

Les vitrages doubles comprennent traditionnellement deux feuilles de verre d'épaisseurs égales ou différentes, réunies à leur périphérie par des entretoises, des adhésifs et des cordons d'étanchéité. Ces vitrages doubles sont ensuite disposés dans un châssis. Pour un meilleur effet d'atténuation acoustique les feuilles sont de préférence d'épaisseurs différentes.

L'ensemble des deux feuilles et des éléments disposés à leur périphérie détermine une espace clos imperméable à l'atmosphère extérieure. Cet espace est le cas échéant rempli d'un gaz peu conducteur de la chaleur. Le plus souvent un système de couches bas-émissif est appliqué sur une face tournée vers l'espace intérieur situé entre les deux feuilles de verre. Pour la plus grande efficacité, le système de couches est situé en face 3, les faces des feuilles étant comptées à partir de celle tournée vers l'extérieur.

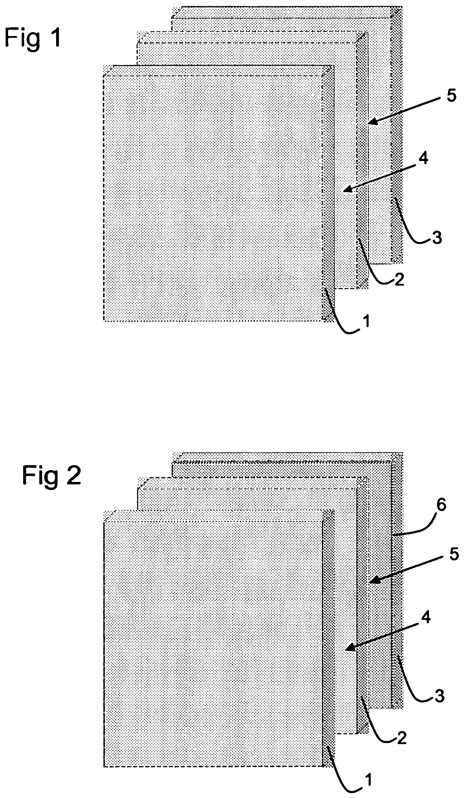

La figure 1 illustre un mode de réalisation d'un triple vitrage (sans les éléments périphériques). La représentation la plus simple consiste en trois feuilles le cas échéant identiques (1,2,3) délimitant entre elles deux espaces (4,5). La distance séparant les feuilles est la même ou différente.

Pour améliorer les caractéristiques isolantes, au moins un système de couches bas-émissif 6 est appliqué sur une face interne de l'un des espaces délimités entre les feuilles de verre. Dans le cas représenté à la figure 2 ce système de couches 6 est avantageusement sur la face 5.

Les vitrages doubles habituellement utilisés offrent aussi avantageusement une certaine sécurité en cas de choc. Pour éviter qu'ils se brisent et laissent choir des morceaux de verre, avantageusement au moins un des panneaux qui les constituent est sous forme d'un ensemble feuilleté.

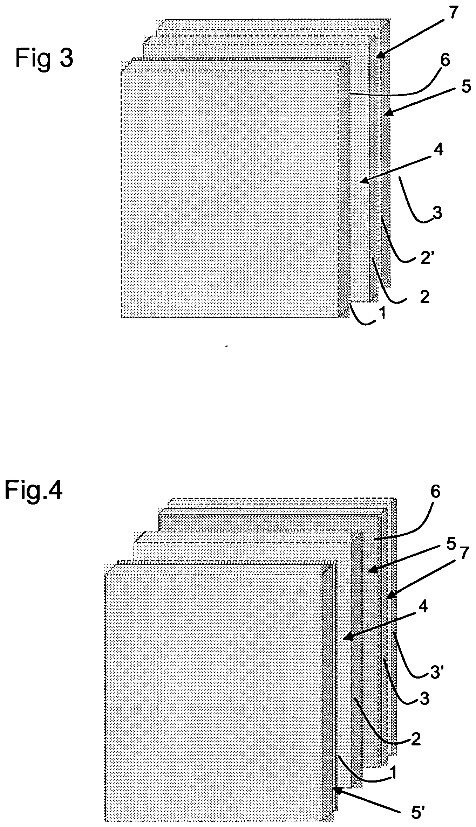

La figure 3 présente la structure typique d'un vitrage double comportant un panneau feuilleté. Le panneau en question est constitué de deux feuilles de verre (2, 2') qui sont le plus communément de même épaisseur. Ces deux feuilles sont assemblées au moyen d'une feuille intercalaire thermoplastique 7 de type polyvinylbutyral (PVB). Le cas échéant, la feuille intercalaire est choisie dans un matériau présentant des propriétés d'atténuation acoustique améliorées par rapport à celle du PVB standard.

Comme précédemment au moins un système de couches 6 est appliqué sur une face tournée vers l'espace situé entre les deux panneaux du vitrage double.

La présence d'un panneau feuilleté est destinée principalement à accroître la sécurité en cas de choc. Les vitrages étant disposés en façade de bâtiments, le panneau feuilleté est avantageusement tourné vers l'intérieur d'où peuvent provenir les chocs. Sous l'effet d'un tel choc le panneau feuilleté se brise éventuellement mais, en raison de sa structure, les feuilles de verre demeurent collées par la feuille intercalaire. On prévient ainsi le risque de chute des morceaux de verre.

Dans la pratique antérieure, le panneau feuilleté est constitué de feuilles de verre dont l'épaisseur est analogue à celles des autres feuilles de verre du vitrage. Typiquement le panneau feuilleté est constitué de deux feuilles de verre, chacune de 4mm d'épaisseur, réunies par une feuille intercalaire de 0,38 ou 0,76mm d'épaisseur, feuille le plus souvent de PVB. La structure obtenue offre effectivement les propriétés propres aux panneaux feuilletés. Les vitrages ainsi constitués sont particulièrement épais, de l'ordre de 24mm. Par ailleurs leur poids est également très élevé. Par suite ces vitrages ne sont utilisés que dans des châssis spécifiquement conçus pour les recevoir. Ceci ne soulève pas de problème délicat lorsque ces vitrages sont prévus pour des bâtiments nouveaux. Dans ce cas dès l'origine les dispositions sont prises pour leur mise en oeuvre. Dans le cas de rénovation au contraire, ils imposent au moins le remplacement des châssis antérieurs, et renchérissent considérablement l'opération.

La difficulté rencontrée avec les vitrages double est bien évidemment accrue avec les vitrages triples. Pour faciliter l'intégration des vitrages nouveaux comprenant un panneau feuilleté l'invention propose de faire en sorte que le poids du vitrage soit volontairement limité. Parallèlement cette limitation impose que l'ensemble des feuilles présente une épaisseur bien maîtrisée, sachant que l'épaisseur de chaque panneau individuellement ne peut être choisie en dessous d'un certain seuil.

La réduction globale de l'épaisseur des feuilles peut se distribuer sur toutes les feuilles. La construction conduit cependant à préférer faire en sorte que la réduction d'épaisseur se porte essentiellement sur les feuilles entrant dans la composition du panneau feuilleté. Il est en effet difficile de trop réduire l'épaisseur des feuilles simples, particulièrement quand les vitrages sont de grandes dimensions. C'est vrai de la feuille tournée vers l'extérieur qui doit pouvoir supporter des sollicitations mécaniques sans trop se déformer, par exemple sous l'effet de la pression du vent. Mais c'est vrai aussi dans une moindre mesure de la feuille située au centre, les opérations de montage imposant nécessairement des efforts mécaniques.

L'expérience montre que le choix consistant à limiter l'épaisseur des feuilles de verre du panneau feuilleté est d'incidence limitée sur les caractéristiques d'ensemble. La résistance au choc pour laquelle il est fait le choix d'introduire ce feuilleté n'est pas telle qu'elle impose des épaisseurs très élevées des feuilles constitutives. L'important comme indiqué précédemment est principalement que ce panneau ne se brise pas en morceaux en cas d'impact.

Les exemples de réalisation illustrent certaines caractéristiques des vitrages triples selon l'invention. Les propriétés sont aussi systématiquement comparées à celles de vitrages triples analogues constitués à partir de feuilles uniquement monolithiques.

Pour les exemples comparatifs les structures utilisées sont systématiquement constituées de trois feuilles de 3,85mm d'épaisseur et l'espace entre ces feuilles est de 14mm.

Les vitrages selon l'invention sont de structure analogue mais la feuille intérieure est remplacée par un feuilleté composé de deux feuilles de 1,9mm d'épaisseur chacune assemblées par un feuille intercalaire de PVB incolore de 0,38mm d'épaisseur.

La feuille de verre centrale est systématiquement une feuille de verre extra-clair.

La feuille de verre tournée vers l'extérieur est en verre clair.

La feuille tournée vers l'intérieur monolithique ou feuilletée est soit en verre clair soit en verre extra-clair.

Pour tous les exemples les faces 2 et 5 ou 3 et 5 sont revêtues de systèmes de couches bas-émissifs. Dans tous les exemples les deux systèmes de couches sont identiques par mesure de simplification. Néanmoins le cas échéant les deux systèmes pourraient être de compositions différentes.

Trois systèmes de couches bas-émissifs typiques sont utilisés pour ces essais. Ils sont notés respectivement a, b et c. Leur composition est la; suivante à partir du substrat verrier : une couche diélectrique épaisse d'oxyde de titane ; une couche d'oxyde de zinc dont le rôle est de favoriser une bonne croissance de la couche réfléchissant les infrarouges ; une couche d'argent ; une couche barrière à base d'oxyde de titane sur la couche d'argent, cette couche étant obtenue à partir de cibles céramiques et conduisant à un oxyde voisin de la stoechiométrie noté TiOₓ; enfin deux couches supérieures l'une de ZnO l'autre de SnO₂, ces dernières étant choisies notamment en fonction de leur rôle anti-réfléchissant. Les couches d'oxyde de zinc ont l'avantage d'être faciles à déposer. En raison de leur fragilité elles sont revêtues d'une couche d'oxyde d'étain. Les épaisseurs de chacune de ces deux couches sont sensiblement égales.

Les épaisseurs respectives de ces couches dans les trois systèmes en Angstrôms sont les suivantes :

| | TiO₂ | ZnO | Ag | TiOₓ | ZnO/SnO₂ |
|---|---|---|---|---|---|
| a | 268 | 75 | 87 | 31 | 474 |
| b | 261 | 75 | 85 | 30 | 486 |
| c | 265 | 75 | 93 | 30 | 470 |

La nature des couches des vitrages et les propriétés optiques de ces derniers sont rapportées dans le tableau suivant. Dans ce tableau la transmission lumineuse (TL) et la réflexion lumineuse (R) sont données pour une incidence au plus égale à deux degrés par rapport à la normale, le facteur solaire (G) qui exprime le rapport en % de l'énergie entrante par rapport à l'énergie incidente, est déterminé selon la norme EN 410, et le coefficient d'isolation (U) est déterminé conformément à la norme EN 673.

Dans chaque série le premier vitrage est donné à titre comparatif, le second est selon l'invention.

| feuille intérieure | système | faces | TL | R | G | U |
|---|---|---|---|---|---|---|
| claire | a | 2 & 5 | 72,7 | 17,3 | 58,6 | 0,71 |
| claire | a | 2 & 5 | 72,7 | 17,3 | 58,5 | 0,71 |
| claire | b | 2 & 5 | 71,9 | 18,5 | 59,8 | 0,73 |
| claire | b | 2 & 5 | 71,9 | 18,5 | 59,6 | 0,73 |
| claire | c | 2 & 5 | 71,8 | 18,2 | 59,4 | 0,72 |
| claire | c | 2 & 5 | 71,8 | 18,2 | 59,3 | 0,72 |
| extra-claire | a | 2 & 5 | 74,9 | 17,7 | 61,5 | 0,71 |
| extra-claire | a | 2 & 5 | 74,9 | 17,7 | 61,4 | 0,71 |
| extra-claire | b | 2 & 5 | 74 | 18,9 | 62,8 | 0,73 |
| extra-claire | b | 2 & 5 | 74 | 18,9 | 62,6 | 0,73 |
| extra-claire | c | 2 & 5 | 74 | 18,6 | 62,4 | 0,72 |
| extra-claire | c | 2 & 5 | 74 | 18,6 | 62,2 | 0,72 |
| claire | a | 3 & 5 | 72,8 | 16,9 | 61,3 | 0,71 |
| claire | a | 3 & 5 | 72,7 | 16,9 | 61,2 | 0,71 |
| claire | b | 3&5 | 71,9 | 17,9 | 62,4 | 0,73 |
| claire | b | 3&5 | 71,9 | 17,9 | 62,3 | 0,73 |
| claire | c | 3&5 | 71,9 | 17,7 | 62,1 | 0,72 |
| claire | c | 3&5 | 71,8 | 17,7 | 62 | 0,72 |
| extra-claire | a | 3&5 | 74,9 | 17,3 | 64,6 | 0,71 |
| extra-claire | a | 3&5 | 74,9 | 17,3 | 64,3 | 0,71 |
| extra-claire | b | 3&5 | 74,1 | 18,3 | 65,8 | 0,73 |
| extra-claire | b | 3&5 | 74 | 18,3 | 65,6 | 0,73 |
| extra-claire | c | 3&5 | 74 | 18,2 | 65,5 | 0,72 |
| extra-claire | c | 3&5 | 74 | 18,2 | 65,3 | 0,72 |

Les vitrages constitués selon l'invention présentent donc pratiquement les mêmes caractéristiques optiques et énergétiques que ceux utilisés à titre comparatif ne comportant pas de panneau feuilleté. La présence du panneau feuilleté comportant deux feuilles de verre relativement minces selon l'invention offre l'avantage d'une meilleure sécurité sans pour autant accroître sensiblement l'épaisseur du vitrage ou son poids.

## Revendications

1. Vitrage triple de sécurité pour façade de bâtiment dont au moins une feuille est un ensemble feuilleté comprenant deux feuilles de verre réunies par une feuillé intercalaire thermoplastique, le vitrage en question présentant un poids au plus égal à 35kg/m² et de préférence au plus égal à 30kg/m², l'ensemble feuilleté étant disposé de telle sorte à pouvoir être tourné vers l'intérieur du bâtiment, cet ensemble comportant deux systèmes de couches minces réfléchissant les infrarouges, sur les faces en position 2 et 5, ou en position 3 et 5., la numérotation des faces se faisant à partir de celle tournée à l'extérieur.

2. Vitrage selon la des revendication précédente dans lequel l'épaisseur totale du ou des ensembles feuilletés n'est pas supérieure à 5,5mm et de préférence pas supérieure à 5mm.

3. Vitrage selon l'une des revendications précédentes dans lequel la ou les feuilles de verre monolithiques, ont chacune une épaisseur au plus égale à 6mm.

4. Vitrage selon l'une des revendications précédentes dans lequel l'épaisseur totale des feuilles de verre n'est pas supérieure à 12mm.

5. Vitrage selon l'une des revendications précédentes dans lequel les deux feuilles de verre de l'ensemble feuilleté sont de même épaisseur.

6. Vitrage selon l'une des revendications précédentes dans lequel la feuille intercalaire thermoplastique du ou des ensembles feuilletés, est une feuille offrant des caractéristiques d'atténuation acoustique améliorées par rapport aux feuilles traditionnelles de polyvinylbutyral (PVB).

7. Vitrage selon l'une quelconque des revendications précédentes dans lequel les différentes feuilles sont disposées à distance les unes des autres, l'espace entre deux feuilles successives étant compris entre 8 et 16mm, et de préférence entre 10 et 15mm.

8. Vitrage selon l'une des revendications précédentes constitué d'une première feuille de verre de 4mm d'épaisseur, distante de 12 à 14mm de la deuxième feuille de verre, elle-même distante de 12 à 14mm de l'ensemble feuilleté.

## Patentansprüche

1. Dreifachsicherheitsverglasung für Gebäudefassaden, bei der mindestens eine Scheibe eine Verbundglasscheibe ist, die zwei Glasscheiben umfasst, die über eine thermoplastische Zwischenfolie verbunden sind, wobei die betreffende Verglasung ein Gewicht von höchstens 35 kg/m² und vorzugsweise höchstens 30 kg/m² aufweist, die Verbundglasscheibe so angeordnet ist, dass sie zum Gebäudeinneren gedreht werden kann, dieser Verbund zwei Systeme aus infrarotreflektierenden dünnen Schichten auf den Flächen an Position 2 und 5 oder an Position 3 und 5 aufweist, wobei die Nummerierung der Flächen bei der nach außen gewandten beginnt.

2. Verglasung nach dem vorhergehenden Anspruch, wobei die Gesamtdicke der Verbundglasscheibe oder -Scheiben 5,5 mm und vorzugsweise 5 mm nicht übersteigt.

3. Verglasung nach einem der vorhergehenden Ansprüche, wobei die monolithische(n) Glasscheibe oder -Scheiben jeweils eine Dicke von höchstens 6 mm aufweist bzw. aufweisen.

4. Verglasung nach einem der vorhergehenden Ansprüche, wobei die Gesamtdicke der Glasscheiben 12 mm nicht übersteigt.

5. Verglasung nach einem der vorhergehenden Ansprüche, wobei die beiden Glasscheiben der Verbundglasscheibe dieselbe Dicke aufweisen.

6. Verglasung nach einem der vorhergehenden Ansprüche, wobei die thermoplastische Zwischenfolie der Verbundglasscheibe oder -Scheiben eine Folie mit verbesserten Schalldämmungseigenschaften gegenüber herkömmlichen Folien aus Polyvinylbutyral (PVB) ist.

7. Verglasung nach einem der vorhergehenden Ansprüche, wobei die verschiedenen Scheiben in einem Abstand zueinander angeordnet sind, wobei der Raum zwischen zwei aufeinanderfolgenden Scheiben zwischen 8 und 16 mm und vorzugsweise zwischen 10 und 15 mm beträgt.

8. Verglasung nach einem der vorhergehenden Ansprüche, die aus einer ersten Glasscheibe mit einer Dicke von 4 mm in einem Abstand von 12 bis 14 mm zu der zweiten Glasscheibe besteht, die wiederum 12 bis 14 mm von der Verbundglasscheibe entfernt ist.

## Claims

1. Safety triple glazing for building facade, at least one sheet of which is a laminated assembly comprising two glass sheets joined by a thermoplastic interlayer sheet, the glazing in question having a weight at most equal to 35 kg/m² and preferably at most equal to 30 kg/m², the laminated assembly being positioned so as to be able to be turned towards the interior of the building, this assembly comprising two systems of infrared-reflecting thin layers, on the faces at position 2 and 5, or at position 3 and 5, the faces being numbered starting from the one turned towards the exterior.

2. Glazing according to the preceding claim, in which the total thickness of the laminated assembly or assemblies is no greater than 5.5 mm and preferably no greater than 5 mm.

3. Glazing according to either of the preceding claims, in which the monolithic glass sheet or sheets each have a thickness at most equal to 6 mm.

4. Glazing according to one of the preceding claims, in which the total thickness of the glass sheets is no greater than 12 mm.

5. Glazing according to one of the preceding claims, in which the two glass sheets of the laminated assembly are of the same thickness.

6. Glazing according to one of the preceding claims, in which the thermoplastic interlayer sheet of the laminated assembly or assemblies is a sheet that offers improved acoustic attenuation characteristics relative to conventional polyvinyl butyral (PVB) sheets.

7. Glazing according to any one of the preceding claims, in which the various sheets are positioned at a distance from one another, the space between two successive sheets being between 8 and 16 mm, and preferably between 10 and 15 mm.

8. Glazing according to one of the preceding claims, constituted of a first glass sheet having a thickness of 4 mm, at a distance of 12 to 14 mm from the second glass sheet, itself at a distance of 12 to 14 mm from the laminated assembly.
